# EUROPÄISCHE PATENTSCHRIFT

(11) **EP 3 848 140 B1**
(45) Veröffentlichungstag und Bekanntmachung des Hinweises auf die Patenterteilung: **13.03.2024**
(21) Anmeldenummer: 20208620.3
(22) Anmeldetag: 19.11.2020
(51) Int. Cl.: B23D 29/02, B23D 35/00, B26B 29/04

(54) **AUFLAGESCHERE ZUM DURCHTRENNEN EINER ANPUTZLEISTE UND ZUM AUTOMATISCHEN ERSTELLEN EINES DICHTBANDÜBERSTANDS**
SHEARS FOR SEVERING A PLASTERING STRIP AND FOR AUTOMATICALLY CREATING A SEALING STRIP PROJECTION
CISAILLE D'APPUI PERMETTANT DE COUPER UNE BAGUETTE DE LIMITATION DE CRÉPI ET DE CRÉER AUTOMATIQUEMENT UNE SAILLIE DE BANDE D'ÉTANCHÉITÉ

(30) Priorität: 08.01.2020 DE 102020100248
(43) Veröffentlichungstag der Anmeldung: 14.07.2021
(73) Patentinhaber: Braun, Magdalena, 8132 Egg (CH)
(72) Erfinder: MEYER, Oliver C., 8207 Schaffhausen (CH)
(74) Vertreter: Schmitt-Nilson Schraud Waibel Wohlfrom Patentanwälte Partnerschaft mbB

(56) Entgegenhaltungen:
- GB-A- 2 221 417
- US-A- 550 483
- US-A- 4 393 588
- US-A- 4 610 086
- US-A- 5 934 166
- US-A1- 2018 272 445

## Beschreibung

Die vorliegende Erfindung betrifft eine Auflageschere gemäß dem Oberbegriff des Anspruchs 1 zum Durchtrennen einer Anputzleiste und zum automatischen Erstellen eines Dichtbandüberstands, eine Anordnung mit einer solchen Auflageschere und einer Anputzleiste sowie ein Verfahren zum Durchtrennen einer Anputzleiste und zum Erzeugen eines definierten Dichtbandüberstands. Beispiele einer solchen Auflageschere sind aus der US 550 483 A, DE 10 2004 005 533 A1, DE 20 2006 001 560 U1 oder US 5 934 166 A bekannt.

Anputzleisten sind in zahlreichen Ausführungsformen bekannt. Besonders typische Ausführungsformen sind Anputzleisten, die an einem Fenster- oder Türrahmen angebracht werden und ein Anputzen der Putzschicht an die Anputzleiste statt bis zu dem Fenster- oder Türrahmen ermöglichen. Dadurch wird die Wärmedämmung und/oder die Putzschicht von dem Fenster- oder Türrahmen entkoppelt, was bei typischerweise auftretenden, großen Temperaturschwankungen dafür sorgt, dass keine Beschädigung, zum Beispiel durch Risse oder Ausbröckeln, am Endbereich der Putzschicht entsteht und dass die Putzschicht am Ende intakt bleibt, sowie dass der Übergang zwischen Fenster- oder Türrahmen und Wärmedämmung und/oder Putzschicht dauerhaft sicher abgedichtet ist.

Aus der DE 102 42 615 A1 ist eine derartige Anputzleiste bekannt, die mittels eines Schaumstoff-Klebebands an einem Fensterrahmen angeklebt ist.

Aus der EP 1 793 061 A1 ist eine Anputzleiste bekannt, die über einen Expansionsstreifen verfügt, der sich nach dessen Freigabe in eine Richtung weg von der Wärmedämmung und auf eine Gegenfläche hin ausdehnt und an dieser dichtend anliegt.

In der Praxis ergeben sich häufig Dichtigkeitsprobleme am Ende bzw. am Stoßbereich einer solchen Anputzleiste bzw. an einer solchen Gebäudeübergangs-Situation.

Es ist daher eine Aufgabe der vorliegenden Erfindung, ein Werkzeug, insbesondere eine Schere, sowie ein Verfahren zum Durchtrennen von Anputzleisten anzugeben, mit denen Anputzleisten so an die Einbausituation angepasst werden können, dass Dichtigkeitsprobleme am Ende bzw. am Stoßbereich zuverlässig vermieden werden.

Diese Aufgabe wird durch den Gegenstand der unabhängigen Ansprüche gelöst. Vorteilhafte Weiterbildungen ergeben sich aus den abhängigen Ansprüchen.

Eine erfindungsgemäße Auflageschere zum Durchtrennen einer Anputzleiste und zum automatischen Erstellen eines Dichtbandüberstands weist einen Klingenkörper und ein Gegenstück auf. Der Klingenkörper ist dazu ausgebildet, die Anputzleiste zu durchtrennen, und das Gegenstück weist eine Auflagefläche zum Auflegen einer zu durchtrennenden Anputzleiste mit Dichtband auf und begrenzt die Bewegung des Klingenkörpers.

Gemäß einer ersten erfindungsgemäßen Variante, die nachfolgend auch als Zwei-Klingen-Variante oder als Auflageschere mit zwei Klingen bezeichnet wird, weist der Klingenkörper zwei beabstandete Klingen auf, wobei eine der Klingen eine Aussparung besitzt, die zur Erzeugung eines definierten Dichtbandüberstands ausgebildet ist.

Die zwei beabstandeten Klingen können dabei insbesondere parallel zueinander angeordnet sein.

Gemäß einer zweiten erfindungsgemäßen Variante, die nachfolgend auch als Drei-Klingen-Variante oder als Auflageschere mit drei Klingen bezeichnet wird, weist der Klingenkörper drei beabstandete Klingen auf, wobei die beiden äußeren Klingen jeweils eine Aussparung aufweisen, die zur Erzeugung eines definierten Dichtbandüberstands ausgebildet sind, und die mittlere Klinge aussparungsfrei ausgebildet ist.

Die drei beabstandeten Klingen können dabei insbesondere parallel zueinander angeordnet sein.

Der Erfinder der vorliegenden Patentanmeldung hat erkannt, dass ein Dichtband am Ende einer Anputzleiste bzw. am Stoßbereich häufig schrumpft, zum Beispiel durch auftretende Temperaturschwankungen und ein Zusammenziehen des Dichtbands in Längsrichtung, was einen Verlust der Dichtfunktion an dieser Stelle zur Folge hat.

Der Erfinder der vorliegenden Patentanmeldung hat des Weiteren erkannt, dass es daher von Vorteil ist, wenn das in bzw. an der Anputzleiste vorgesehene Dichtband am Ende der Anputzleiste ein Stück weit über die Endkante der Anputzleiste, insbesondere die Endkante des Hartkunststoff-Körpers übersteht. Dies wird erfindungsgemäß als Dichtbandüberstand bezeichnet. Ein geeigneter Dichtbandüberstand hat typischerweise eine Abmessung zwischen weniger als 1 mm und 10 mm.

Erfindungsgemäße Anputzleisten haben jedoch regelmäßig keinen Dichtbandüberstand. Zudem ist eine manuelle Erstellung eines Dichtbandüberstands am Ende einer Anputzleiste schwierig herzustellen, z.B. weil beim Abschneiden der Hartkunststoffbereichs der Anputzleiste häufig versehentlich auch das Dichtband am Ende mit abgeschnitten oder beschädigt wird. Zudem birgt eine manuelle Erstellung eines Dichtbandüberstands am Ende einer Anputzleiste die Gefahr einer Verletzung.

Durch die erfindungsgemäße Auflageschere, Zwei-Klingen-Variante und Drei-Klingen-Variante wird ein solcher Dichtbandüberstand direkt beim individuellen Ab- bzw. Zuschneiden der Anputzleiste auf die gewünschte Länge automatisch, zuverlässig, und reproduzierbar mit der gewünschten Abmessung erzeugt, ohne dass hier eine Verletzungsgefahr besteht.

Durch die erfindungsgemäße Auflageschere, Zwei-Klingen-Variante wird eine Anputzleiste in zwei Teilstücke zerschnitten und gleich bei einem Teilstück ein Ende mit Dichtbandüberstand erzeugt.

Durch die erfindungsgemäße Auflageschere, Drei-Klingen-Variante wird eine Anputzleiste in zwei Teilstücke zerschnitten und gleich bei beiden Teilstücken jeweils ein Ende mit Dichtbandüberstand erzeugt. Die so erzeugten zwei Anputzleisten-Teilstücke weisen insbesondere jeweils ein linkes und ein dazu spiegelverkehrtes rechtes Anputzleistenende, jeweils mit Dichtbandüberstand, auf.

Bei der Verwendung einer solchen Drei-Klingen-Auflageschere können mit nur einem Schnitt zwei Anputzleisten-Teilstücke, jeweils mit einem Dichtbandüberstand am Anputzleistenende erzeugt werden.

Verglichen mit der manuellen Erstellung von Anputzleistenenden mit Dichtbandüberstand wird der Ausschuss reduziert und Kosten werden eingespart.

Gemäß einem weiteren Aspekt der vorliegenden Patentanmeldung ist die Aussparung in einer der Klingen, bei der Zwei-Klingen-Variante, oder in den beiden äußeren Klingen, bei der Drei-Klingen-Variante, so bemessen und so an einer Längsposition der betreffenden Klinge angeordnet, dass sie der Position und dem Querschnitt des Dichtbands bei einer entsprechenden, auf derAuflagefläche des Gegenstücks aufgelegten, zu durchtrennenden Anputzleiste mit Dichtband entspricht.

Durch die Klinge mit Aussparung, bei der Zwei-Klingen-Variante, und durch die beiden äußeren Klingen mit Aussparung, bei der Drei-Klingen-Variante, wird erfindungsgemäß nur der Hartkunststoff-Bereich der Anputzleiste durchschnitten/durchtrennt, und das Dichtband wird durch die betreffende Klinge stehengelassen. Da durch die andere, durchgehende Klinge, bei der Zwei-Klingen-Variante, bzw. durch die mittlere durchgehende Klinge, bei der Drei-Klingen-Variante, die gesamte Anputzleiste, also einschließlich des Hartkunststoff-Bereichs, durchtrennt wird, wird somit ein Anputzleisten-Ende mit Dichtbandüberstand, bei der Zwei-Klingen-Variante, bzw. zwei insbesondere spiegelverkehrte Anputzleisten-Enden, jeweils mit Dichtbandüberstand, bei der Drei-Klingen-Variante, erzeugt.

Mit einer erfindungsgemäßen Auflageschere, sowohl Zwei-Klingen-Variante als auch Drei-Klingen-Variante, können Anputzleistenenden mit Dichtbandüberstand erstellt werden, deren Endkante einen beliebigen Winkel zur Längserstreckungsrichtung der Anputzleiste aufweist.

Ein typischer Anwendungsfall ist derjenige, bei dem ein Anputzleistenende mit Dichtbandüberstand erstellt wird, dessen Endkante rechtwinklig zur Längserstreckungsrichtung der Anputzleiste liegt.

Ein anderer typischer Anwendungsfall ist derjenige, bei dem ein auf Gehrung geschnittenes Anputzleistenende mit Dichtbandüberstand erzeugt wird, zum Beispiel für eine Innenecke.

Der Winkel eines solchen Anputzleistenendes mit Dichtbandüberstand kann dabei durch den Auflagewinkel auf der Auflagefläche des Gegenstücks, bezogen auf die Klingen eingestellt werden.

Die Zwei-Klingen-Auflageschere eignet sich auch dazu, einen Dichtbandüberstand nachträglich an einem Ende enier Anputzleiste bzw. eines Anputzleisten-Teilstücks zu erzeugen.

Durch den Aufbau nach dem Prinzip einer nach Art einer Amboss-Schere ausgebildet ist die Handhabung der erfindungsgemäßen Auflageschere einfach und intuitiv.

Es wird hier betont, dass unter dem Begriff "Dichtband" alle denkbaren Formen von Kunststoffbändern und Kunststoffstreifen verstanden werden, die eine klebende und/oder dichtende Funktion an der Anputzleiste und insbesondere an deren Anputzleistenende innehaben. Unter den Begriff "Dichtband" fallen erfindungsgemäß Abdichtungsbänder, Fixierbänder, Klebebänder sowie Schaumstoffbänder. Bei einem Schaumstoffband kann es sich sowohl um ein geschlossenzelliges, also nicht expandierendes Schaumstoffband, oder ein offenzelliges, also expandierendes Schaumstoffband handeln. Alle diese Dichtbänder können einseitig oder zweiseitig klebend ausgebildet sein.

Gemäß einer ersten Ausführungsform kann ein zwischen der aussparungsfreien Klinge und der Klinge mit Aussparung bei der Zwei-Klingen-Auflageschere bzw. und den beiden äußeren Klingen mit Aussparung bei der Drei-Klingen-Auflageschere gelegener Hart-Kunststoffbereich von der aufgelegten Anputzleiste und den entstehenden zwei Anputzleisten-Teilstücke abgetrennt werden und stellt Ausschuss dar. Es fällt somit Ausschuss an, der lediglich dem Hart-Kunststoffbereich in der Breite des erzeugten Dichtbandüberstands entspricht, was im Vergleich zu manuell hergestelltem Dichtbandüberstand sehr wenig Ausschuss ist.

Gemäß einer weiteren Ausführungsform der Erfindung kann die Position der Aussparung in Klingenerstreckungsrichtung und/oder die Aussparung in der Klinge mit Aussparung bei der Zwei-Klingen-Auflageschere bzw. in wenigstens einer der beiden äu-ßeren Klingen mit Aussparung bei der Drei-Klingen-Auflageschere, insbesondere die Höhe und Länge der Aussparung in der Klinge mit Aussparung bei der Zwei-Klingen-Auflageschere bzw. in wenigstens einer der beiden äußeren Klingen mit Aussparung bei der Drei-Klingen-Auflageschere, in Klingenerstreckungsrichtung gesehen, derart bemessen sein, dass ein Dichtband einer auf der Auflagefläche positionierten Anputzleiste bei einem Verschwenken der zwei bzw. drei Klingen in Richtung Auflagefläche in der Aussparung aufgenommen und somit stehengelassen wird, aber die anderen Bereiche der Anputzleiste, insbesondere die Hart-Kunststoffbereiche der Anputzleiste durch diese Klinge durchtrennt werden, sodass eine unterbrochene Schnittkante gebildet wird.

Durch die Aussparung in der entsprechenden Klinge ist es möglich, die Anputzleiste zu durchtrennen und dabei das Dichtband stehen zu lassen. Somit ermöglicht die Aussparung in der entsprechenden Klinge die Erzeugung des Dichtbandüberstands beim Durchtrennen der Anputzleiste. Die Aussparung kann dabei der Geometrie bzw. der Kontur des Dichtbands entsprechend ausgebildet sein, und eine rechteckige, kreisbogenförmige etc. Form aufweisen.

Gemäß einer weiteren Ausführungsform der Erfindung kann durch die aussparungsfreie Klinge bzw. durch wenigstens eine der beiden äußeren Klingen mit Aussparung die gesamte, auf der Auflagefläche positionierte Anputzleiste entlang einer durchgehenden Schnittkante durchtrennt werden. Dadurch kann das durch die Klinge mit Aussparung bei der Zwei-Klingen-Auflageschere bzw. durch wenigstens eine der beiden äußeren Klingen mit Aussparung bei der Drei-Klingen-Auflageschere stehengelassene Dichtband um eine Länge über diese durchgehende Schnittkante überstehen, die dem Abstand zwischen den zwei bzw. jeweils zwei zueinander benachbarten der drei Klingen, quer zur Klingenerstreckungsrichtung gesehen, entspricht.

Der Dichtbandüberstand kann somit über den Abstand zwischen der aussparungsfreien Klinge und der bzw. den Klingen mit Aussparung eingestellt bzw. festgelegt werden. Darüber hinaus ermöglicht die aussparungsfreie Klinge das vollständige Durchtrennen der Anputzleiste in zwei separate Anputzleisten-Teilstücke.

Gemäß einer weiteren Ausführungsform der Erfindung kann der Abstand zwischen den zwei Klingen bzw. zwischen je zwei zueinander benachbarten der drei Klingen, quer zur Klingenerstreckungsrichtung gesehen, zwischen 0,1 mm und 5 mm, vorzugsweise zwischen 0,5 mm und 3 mm, weiter vorzugsweise zwischen 1,5 mm und 2 mm, betragen.

Folglich kann der Dichtbandüberstand zwischen 0,1 mm und 5 mm. vorzugsweise zwischen 0,5 mm und 3 mm, weiter vorzugsweise zwischen 1,5 mm und 2 mm betragen.

Gemäß einer weiteren Ausführungsform der Erfindung kann die Aussparung in der Klinge mit Aussparung bzw. in wenigstens einer der beiden äußeren Klingen mit Aussparung in Klingenerstreckungsrichtung eine rechteckige Gestalt haben, die im Wesentlichen der Außenform des Dichtbands entspricht.

Die Anputzleiste wird im Bereich der Aussparung von der Klinge mit Aussparung nicht durchtrennt. Daher entspricht die Form der Aussparung im Wesentlichen der Außenform des Dichtbands, damit beim Durchtrennen der Anputzleiste nur der Dichtbandüberstand erzeugt wird und alle andere Bereiche der Anputzleiste sauber durchtrennt werden. Die Aussparung kann auch eine andere geometrische Gestalt aufweisen, die an die Außenform des Dichtbands angepasst ist.

Zusätzlich oder alternativ kann die Aussparung in der Klinge mit Aussparung bzw. in wenigstens einer der beiden äußeren Klingen mit Aussparung eine Länge, in Klingenerstreckungsrichtung gesehen, von etwa 10 mm bis 12 mm besitzen. Eine solche Länge entspricht dem üblichen Breitenmaß des Dichtbands.

Zusätzlich oder alternativ kann die Aussparung in der Klinge mit Aussparung bzw. in wenigstens einer der beiden äußeren Klingen mit Aussparung eine Höhe, in Schwenkrichtung gesehen, von etwa 3 mm bis 4,5 mm besitzen. Ein solche Höhe entspricht der üblichen Höhe des Dichtbands.

Gemäß einer weiteren Ausführungsform der Erfindung kann das Gegenstück eine vordere, insbesondere gelenkseitig angeordnete Anschlagswand besitzen, die zur Positionierung der Anputzleiste ausgebildet ist.

Die Anschlagswand vereinfacht zum einen das korrekte Positionieren der Anputzleiste auf dem Gegenstück, durch Anlegen der Anputzleiste gegen diese Anschlagswand, sodass beim Verschwenken des Klingenkörpers in Richtung des Gegenstücks zum Durchtrennen der Anputzleiste die Aussparung der Klinge/n mit Aussparung, das in der Anputzleiste vorhandene Dichtband aufnehmen und stehenlassen. Zum anderen verhindert die Anschlagswand, dass sich die Anputzleiste während des Durchtrennens auf dem Gegenstück verschiebt.

Gemäß einer weiteren Ausführungsform der Erfindung kann die vordere, insbesondere gelenkseitig angeordnete Kante der Aussparung in der Klinge mit Aussparung bzw. in wenigstens einer der beiden äußeren Klingen mit Aussparung einen Abstand zur Anschlagswand, aufweisen, die dem Abstand der vorderen Fläche des Dichtbands zu der vordersten Kante der auf der Auflagefläche positionierten Anputzleiste entspricht.

Das Dichtband ist in der Regel außermittig in der Anputzleiste angeordnet. Bei einer solchen Ausführung ist das Positionieren der Anputzleiste vereinfacht, indem die vorderste Kante der Anputzleiste, z. B. die vordere Schutzlaschen-Endkante an der Anschlagswand angelegt wird.

Zusätzlich oder alternativ kann die vordere, insbesondere gelenkseitig angeordnete Kante der Aussparung in der Klinge mit Aussparung bzw. in wenigstens einer der beiden äußeren Klingen mit Aussparung einen Abstand von etwa 5 mm bis 30 mm zur Anschlagswand aufweisen. Ein solches Maß entspricht dem üblichen Abstand zwischen der vordersten Kante der Anputzleiste, z. B. der vorderen Schutzlaschen-Endkante, und der vorderen Fläche des Dichtbands.

Gemäß einer weiteren Ausführungsform der Erfindung kann in der Anschlagswand ein Schlitz ausgebildet sein, der eine Bewegung der zwei bzw. drei Klingen durch die Anschlagswand ermöglicht. Ein solcher Schlitz in der Anschlagswand ermöglicht ein komplettes Schließen der Auflageschere bei gleichzeitig einfacher Klingengeometrie und somit ein vollständiges Durchtrennen der auf dem Gegenstück angeordneten Anputzleiste.

Gemäß einer weiteren Ausführungsform der Erfindung kann die Auflagefläche zwei bis drei Vertiefungsrillen an Breitenpositionen aufweisen, die in der Schwenk-Ebene(n) der zwei bzw. drei Klingen angeordnet sind, sodass bei einem Verschwenken der zwei bzw. drei Klingen in Richtung Auflagefläche die zwei bzw. drei Klingen in den zwei bzw. drei Vertiefungsrillen aufgenommen werden.

Die Vertiefungsrillen dienen als eine Art Aufnahmebereich für die Schneidkanten der Klingen und ermöglichen ein vollständiges und sauberes Durchtrennen der Anputzleiste, da die Schneidkanten der Klingen sich bis unterhalb der Auflagefläche des Gegenstücks bewegen können.

Zusätzlich können die zwei bzw. drei Vertiefungsrillen zur Positionierung der Anputzleiste dienen. Die Vertiefungsrillen entsprechen den Positionen, an denen die Klingen auf das Gegenstück treffen und somit den Positionen, an denen die Klingen die auf dem Gegenstück angeordnete Anputzleiste durchtrennen werden. Somit können die Vertiefungsrillen als Markierung verwendet werden, mithilfe derer die Anputzleiste korrekt auf dem Gegenstück ausgerichtet werden kann.

Gemäß einer weiteren Ausführungsform der Erfindung liegen die unteren Schneidkanten der zwei bzw. drei Klingen in einer Ebene senkrecht zur Klingenerstreckungsrichtung. Das bedeutet, dass die unteren Schneidkanten der Klingen alle in der gleichen Ebene liegen und so die Anputzleiste gleichmäßig und vollständig durchtrennen.

Gemäß einer weiteren Ausführungsform der Erfindung kann der Klingenkörper mit einem ersten Griffabschnitt verbunden sein, und das Gegenstück kann mit einem zweiten Griffabschnitt verbunden sein, die über ein Gelenk derart miteinander verbunden sind, dass der Klingenkörper und das Gegenstück gegeneinander beweglich sind.

Gemäß einer weiteren Ausführungsform der Erfindung können die zwei bzw. drei Klingen durch wenigstens ein Abstandshalter-Stabilisierungselement miteinander verbunden sein. Das Abstandshalter-Stabilisierungselement definiert zum einen den Abstand zwischen zwei zueinander benachbart angeordneten Klingen und erhöht so gleichzeitig die Stabilität und Steifigkeit des Klingenkörpers, da das Element die Klingen fest zueinander fixiert. Dadurch wird ein Verschieben und/oder Verbiegen der Klingen des Klingenkörpers insbesondere auch während des Durchtrennens der Anputzleiste verhindert.

Gemäß einer weiteren Ausführungsform der Erfindung kann die Länge der Auflagefläche in Klingenerstreckungsrichtung gleich oder geringfügig größer als die Länge der zwei Klingen sein. Die Länge der Auflagefläche in Klingenerstreckungsrichtung ist insbesondere so zu wählen, dass sie einen guten Kompromiss zwischen ausreichender Stabilität für eine sichere Auflage der Anputzleiste zum Durchtrennen derselben einerseits und guter Handhabbarkeit bei der Verwendung durch einen Benutzer andererseits umsetzt.

Gemäß einer weiteren Ausführungsform der Erfindung kann die Breite der Auflagefläche in einer Richtung quer zur Klingenerstreckungsrichtung 2 bis 10 cm sein. Die Breite der Auflagefläche ist ebenfalls so zu wählen, dass sie einen guten Kompromiss zwischen sicherer Auflage der Anputzleiste zum Durchtrennen derselben einerseits und guter Handhabbarkeit bei der Verwendung durch einen Benutzer andererseits umsetzt.

Gemäß einer weiteren Ausführungsform der Erfindung kann der Klingenkörper austauschbar mit dem Gegenstück verbunden sein. Somit kann ein Gegenstück mit verschiedenen Klingenkörpern verwendet werden, bzw. ein Klingenkörper mit unterschiedlichen Gegenstücken, je nach Anputzleiste, die durchtrennt und gewünschtem Dichtbandüberstand, der erzeugt werden soll. Zudem kann das Gegenstück einer Gehrungsschere eingewechselt werden. Die Austauschbarkeit erhöht somit die Flexibilität in der Verwendung und ermöglicht darüber hinaus das einfache Austauschen defekter Klingenkörper und/oder Gegenstücke, ohne die komplette Auflageschere ersetzen zu müssen.

Gemäß einer weiteren Ausführungsform kann die Auflageschere nach Art einer Gehrungsschere ausgebildet sein, wobei insbesondere die Auflagefläche des Gegenstücks mit wenigstens einem Anschlag oder einer Markierung für eine schräge Positionierung der zu durchtrennenden Anputzleiste, bezogen auf die Klingenerstreckungsrichtung und/oder für einen schrägen Schnitt durch die Anputzleiste ausgebildet oder versehen ist.

Mit einer Gehrungsschere sind schräge Schnitte, d.h. Schnitte in einem Winkel ungleich 90° zur Klingenerstreckungsrichtung möglich. Solche Schnitte sind insbesondere für den Einsatz der Anputzleisten in Innenecken, insbesondere von Fenster- oder Türrahmen vorteilhaft, da ein solcher Gehrungssschnitt eine saubere Abdichtung zweier in einem Eckbereich aufeinandertreffender Anputzleisten ermöglicht. Bei einer Gehrungsschere erhöht sich die ausgestanzte Fläche beziehungsweise der ausgestanzte Materialabschnitt der Anputzleiste aufgrund des Winkels, verglichen mit einem 90° Schnitt.

Die Erfindung betrifft auch eine Anordnung, aufweisend eine Auflageschere der hier beschriebenen Art und eine auf der Auflagefläche des Gegenstücks aufgelegte Anputzleiste mit einem Dichtband.

Die Erfindung betrifft auch ein Verfahren zum Durchtrennen einer Anputzleiste und zum Erzeugen eines definierten Dichtbandüberstands eines Dichtbandes, das die folgenden Schritte aufweist: Positionieren einer Anputzleiste, die ein Dichtband aufweist, auf der Auflagefläche eines Gegenstücks einer Auflageschere; Durchtrennen der Anputzleiste, indem ein Klingenkörper mit zwei beabstandeten Klingen, von der eine Klinge eine Aussparung aufweist oder indem ein Klingenkörper mit drei beanstandeten Klingen, von denen die beiden äußeren Klingen jeweils eine Aussparung aufweisen und die mittlere Klinge aussparungsfrei ausgebildet ist, unter Durchführung eines drückenden Schnitts durch die Anputzleiste gleitet, und auf der Auflagefläche des Gegenstücks oder kurz davor zu liegen kommt; wobei eine Klinge bzw. die mittlere Klinge des Klingenkörpers die gesamte Anputzleiste durchtrennt und die andere Klinge bzw. die äußeren Klingen im Bereich der Aussparung das Dichtband stehen lässt.

Bei der Zwei-Klingen Variante können die zwei beabstandeten Klingen insbesondere parallel zueinander angeordnet sein. Bei der Drei-Klingen Variante können die drei beabstandeten Klingen insbesondere parallel zueinander angeordnet sein.

Gemäß einer Weiterbildung des Verfahrens erfolgt das Positionieren der Anputzleiste durch Anlegen der Anputzleiste an einer vorderen, insbesondere gelenkseitig angeordneten Anschlagswand des Gegenstücks.

Die vorstehend für die erfindungsgemäße Auflageschere angegebenen Ausführungsformen und Vorteile gelten auch für die erfindungsgemäße Anordnung und das erfindungsgemäße Verfahren und werden zur Vermeidung von Wiederholungen hier nicht noch einmal angegeben.

Die Erfindung wird nachfolgend anhand von Ausführungsbeispielen mit Bezug auf die beigefügten Figuren näher erläutert. Es zeigen:
Fig. 1 eine perspektivische Ansicht schräg von oben einer erfindungsgemäßen Auflageschere gemäß einem ersten Ausführungsbeispiel in einem zumindest teilweise geöffneten Zustand und einer darauf positionierten Anputzleiste;
Fig. 2 eine perspektivische Ansicht schräg von oben einer erfindungsgemäßen Auflageschere gemäß einem zweiten Ausführungsbeispiel in einem zumindest teilweise geöffneten Zustand und einer darauf positionierten Anputzleiste;
Fig. 3 eine weitere perspektivische Ansicht schräg von oben der erfindungsgemäßen Auflageschere gemäß dem zweiten Ausführungsbeispiel mit darauf positionierter Anputzleiste;
Fig. 4 eine perpektivische Darstellung eines Gegenstücks der Auflageschere gemäß dem zweiten Ausführungsbeispiel mit darauf positionierter, durchtrennter Anputzleiste und einem Hart-Kunststoffteilstück, das durch das Durchtrennen der Anputzleiste mit der Auflageschere gemäß dem zweiten Ausführungsbeispiel als Ausschuss entsteht;
Fig. 5 eine Seitenansicht einer erfindungsgemäßen Auflageschere gemäß dem ersten oder zweiten Ausführungsbeispiel in einem geschlossenen Zustand und darauf positionierter Anputzleiste;
Fig. 6 eine Seitenansicht der erfindungsgemäßen Auflageschere gemäß dem ersten oder zweiten Ausführungsbeispiel in einem geöffneten Zustand und darauf positionierter Anputzleiste; und
Fig. 7 eine perspektivische Ansicht schräg von oben einer als Gehrungsschere ausgebildeten, erfindungsgemäßen Auflageschere gemäß einem dritten Ausführungsbeispiel.

Die Figuren sind lediglich schematischer Natur und dienen nur dem Verständnis der Erfindung. Gleichen Elemente sind mit gleichen Bezugszeichen versehen.

Merkmale der einzelnen Ausführungsbeispiele können auch in anderen Ausführungsbeispielen realisiert werden. Sie sind also untereinander austauschbar.

Die erfindungsgemäße Auflagescheren dienen zum Zuschneiden und Durchtrennen von Anputzleisten und sind jeweils nach Art einer Amboss-Schere ausgebildet. Amboss-Scheren zeichnen sich dadurch aus, dass der Klingenkörper beim Schneiden durch das Schnittgut gleitet und auf ein als eine glatte Metall- und/oder Kunststoffoberfläche ausgebildetes Gegenstück trifft, den sogenannten Amboss. Der Klingenkörper einer Amboss-Schere führt somit einen drückenden Schnitt durch.

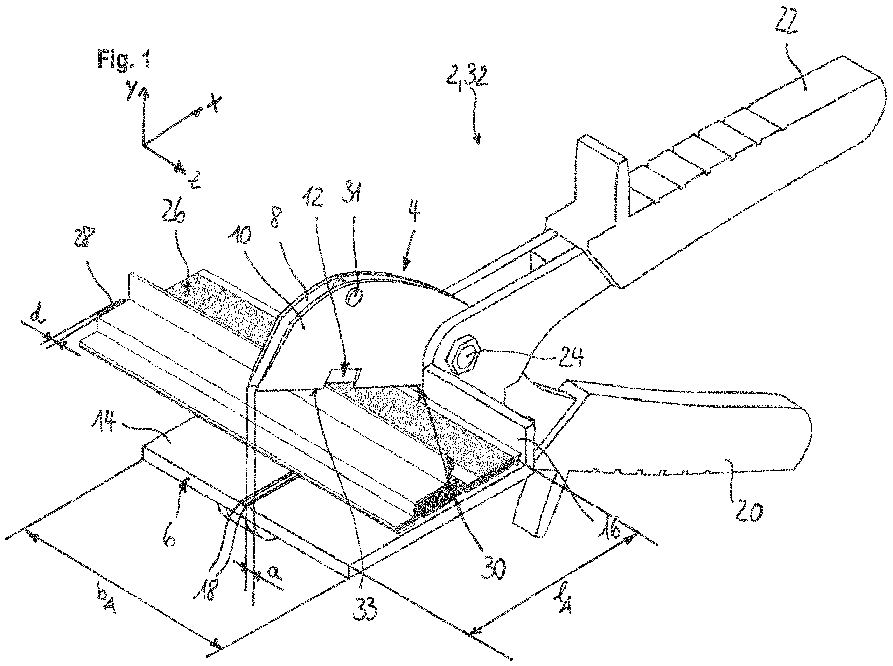

Fig. 1 zeigt eine erfindungsgemäße Auflageschere 2 gemäß einem ersten Ausführungsbeispiel in einer perspektivischen Darstellung schräg von oben. Die Auflageschere 2 besitzt einen Klingenkörper 4 und ein Gegenstück 6.

In Fig. 1 ist der Klingenkörper 4 mit einem ersten Griffabschnitt 20 verbunden. Das Gegenstück 6 ist mit einem zweiten Griffabschnitt 22 verbunden, wobei der erste Griffabschnitt 20 und der zweite Griffabschnitt 22 über eine Gelenkverbindung 24 derart miteinander verbunden sind, dass der Klingenkörper 4 und das Gegenstück 6 gegeneinander beweglich sind. Die Gelenkverbindung 24 ist dabei so ausgebildet, dass der Klingenkörper 4 austauschbar mit dem Gegenstück 6 verbunden ist.

Zum Beispiel kann die Gelenkverbindung 24 als Kombination aus Schraube, Mutter und entsprechenden Öffnungen in dem erstem und zweiten Griffabschnitt 20, 22 ausgebildet sein. Durch Lösen der Mutter von der Schraube, durch Herausnehmen des Klingenkörpers 4 mit Griffabschnitt 20 und Ersetzen durch einen anderen Klingenkörper 4 mit Griffabschnitt 20 und durch Aufschrauben der Mutter auf die Schraube können unterschiedliche Klingenkörper 4 vorgesehen werden.

Der Klingenkörper 4 weist gemäß dem ersten Ausführungsbeispiel zwei Klingen 8, 10 auf, die parallel und mit einem Abstand a zueinander beabstandet angeordnet sind. Die Klinge 10 weist eine Aussparung 12 auf, die zur Erzeugung eines definierten Dichtbandüberstands d ausgebildet ist, die Klinge 8 ist aussparungsfrei ausgebildet.

Das Gegenstück 6 besitzt eine Auflagefläche 14 mit einer Anschlagswand 16 und Vertiefungsrillen 18. Die Auflagefläche 14 dient zur Aufnahme bzw. Auflage einer zu durchtrennenden Anputzleiste 26 mit einem integrierten Dichtband 28 und begrenzt die Bewegung des Klingenkörpers 4. Eine Länge l_{A} der Auflagefläche 14 in Klingenerstreckungsrichtung X ist somit in etwa gleich der Länge der Klingen 8, 10 in Klingenerstreckungsrichtung X oder geringfügig größer. Eine Breite b_{A} der Auflagefläche 14 in einer Klingenanordnungsrichtung Z quer zur Klingenerstreckungsrichtung X beträgt insbesondere zwischen 2 cm und 10 cm.

Die Anschlagswand 16 ist gelenkseitig an der Auflagefläche 14 entlang einer Klingenanordnungsrichtung Z ausgebildet und dient zur Positionierung der Anputzleiste 26 auf der Auflagefläche 14. In der Anschlagswand 16 ist ein Schlitz 30 ausgebildet, der eine Bewegung des Klingenkörpers 4, insbesondere der Klingen 8, 10 des Klingenkörpers 4 durch die Anschlagswand 16 hindurch ermöglicht.

Die Vertiefungsrillen 18 erstrecken sich in der Klingenerstreckungsrichtung X in der Auflagefläche 14, vorzugsweise über die gesamte Länge L_{A} der Auflagefläche 14 in der Klingenerstreckungsrichtung X und sind derart angeordnet, dass bei einem Verschwenken des Klingenkörpers 4 in Richtung der Auflagefläche 14 die Klingen 8, 10 in den zwei Vertiefungsrillen 18 aufgenommen werden. Die Vertiefungsrillen 18 bilden somit Aufnahmebereiche für die Klingen 8, 10 des Klingenkörpers 4 aus und unterstützen ein vollständiges und sauberes Durchtrennen der Anputzleiste 26. Die Vertiefungsrillen 18 sind also an Positionen, die den Schwenk-Ebenen der Klingen 8, 10 entsprechen, auf oder in der Auflagefläche 14 positioniert. Darüber hinaus können die Vertiefungsrillen 18 bei der Positionierung der Anputzleiste 26 auf der Auflagefläche 14 als Orientierungshilfe genutzt werden.

Die beiden Klingen 8, 10 sind über ein Abstandshalter-Stabilisierungselement 31 miteinander verbunden. Das Abstandshalter-Stabilisierungselement 31 ist in Öffnungen angeordnet, die entfernt von unteren, geschliffenen Schnittkanten 33 der Klingen 8, 10 in den Klingen 8, 10 ausgebildet sind. Das Abstandshalter-Stabilisierungselement 31 ist dabei so ausgebildet, dass es die Klingen 8, 10 in dem vorgegebenen Abstand a zueinander beabstandet anordnet und ein Verkippen und/oder Verschieben der Klingen 8, 10 relativ zueinander möglichst verhindert.

Beispielsweise kann das Abstandshalter-Stabilisierungselement 31 als ein Bolzen mit einem konstanten Außendurchmesser ausgebildet sein, der mittels Presspassung in den Öffnungen der Klingen 8, 10 angeordnet ist.

Der Grundkörper der Anputzleiste 26 ist häufig überwiegend aus einem Kunststoff, bevorzugt aus einem Hart-Kunststoff ausgebildet und insbesondere extrudiert worden. Das darin aufgenommene Dichtband 28 ist bspw. aus einem Schaumstoff ausgebildet, kann aber auch aus einem anderen dichtenden Material sein.

Die Auflageschere 2 gemäß dem ersten Ausführungsbeispiel, nachfolgend als Zwei-Klingen-Auflageschere 32 bezeichnet, durchtrennt die auf der Auflagefläche 14 positionierte Anputzleiste 26 so in zwei Anputzleisten-Teilstücke, dass eines davon den gewünschten Dichtbandüberstand d aufweist. Das andere Anputzleisten-Teilstück besitzt eine ebene Schnittfläche mit durchgehender Schnittkante.

Dazu durchtrennt die aussparungsfreie Klinge 8 bei einer Verschwenkung des Klingenkörpers 4 auf das Gegenstück 6 sowohl den Hart-Kunststoffkörper der Anputzleiste 26 als auch Dichtband 28. Die Klinge 10 mit der Aussparung 12 durchtrennt nur den Hart-Kunststoffkörper der Anputzleiste 26, nicht aber das Dichtband 28. Dazu ist die Aussparung 12 in der Klinge 10 in der Klingenerstreckungsrichtung X derart bemessen und positioniert, dass bei einem Verschwenken zum Gegenstück 6 hin das Dichtband 28 in der Aussparung 12 aufgenommen und somit stehengelassen, also nicht durchtrennt wird. Somit erzeugt die Klinge 10 eine unterbrochene Schnittkante.

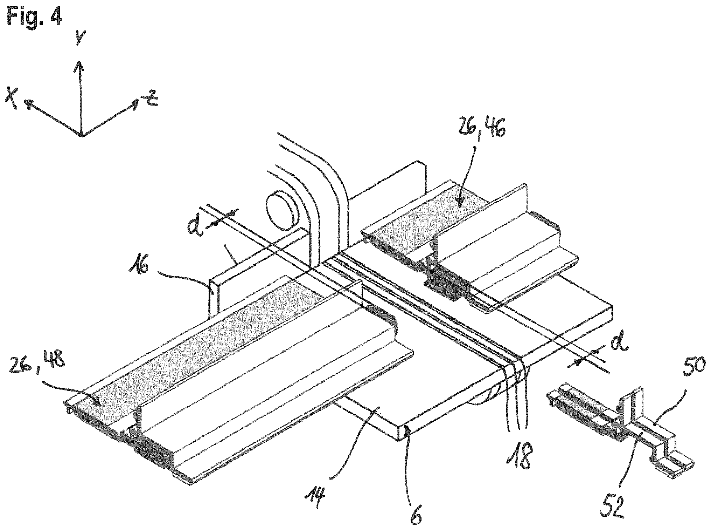

Der Dichtbandüberstand d wird somit durch den Abstand a zwischen den beiden Klingen 8, 10, quer zur Klingenerstreckungsrichtung X definiert. Der Abstand a kann je nach Anwendungsfall variieren und liegt zwischen 0,1 mm und 5 mm, bevorzugt zwischen 0,5 mm und 3 mm, weiter bevorzugt zwischen 1,5 mm und 2 mm. Der abgetrennte Hart-Kunststoffbereich zwischen den beiden Klingen 8, 10 (vgl. Fig. 4) ist Ausschuss.

In dem in Fig. 1 gezeigten beispielhaften Aufbau der Auflageschere 2 kann die Zwei-Klingen-Auflageschere 32 die Anputzleiste 26 unter Erzeugung des Dichtbandüberstands d an dem in Fig. 1 linken (hinteren) Ende durchtrennen. Es ist aber auch eine Zwei-Klingen-Auflageschere 32 umsetzbar, bei der die Anputzleiste 26 unter Erzeugung des Dichtbandüberstands d an dem in Fig. 1 rechten (vorderen) Ende durchtrennt wird. Für diesen Fall sind die Positionen der aussparungsfreien Klinge 8 und der Klinge mit Aussparung 10 der Zwei-Klingen-Auflageschere 32 verglichen mit den in Fig. 1 abgebildeten Positionen der Klingen 8, 10 vertauscht. Das bedeutet, die aussparungsfreie Klinge 8 befindet sich an der Position der Klinge 10 aus Fig. 1 und die Klinge 10 befindet sich an der Position der Klinge 8 aus Fig. 1.

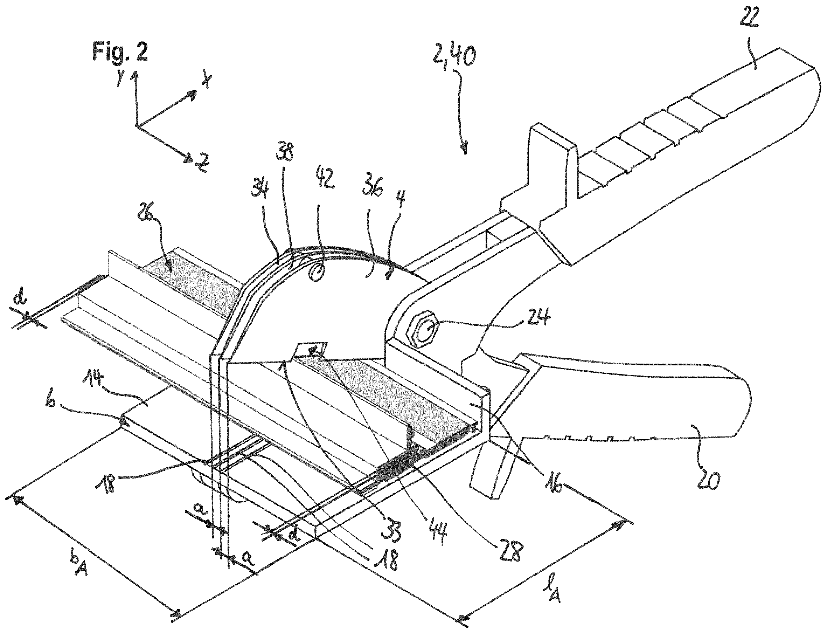

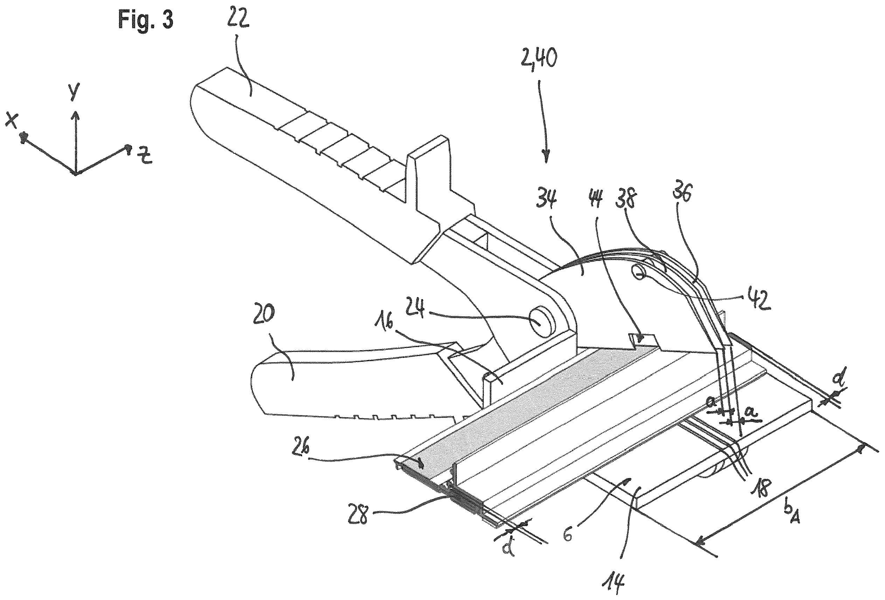

Die Fig. 2 und 3 zeigen ein zweites Ausführungsbeispiel der erfindungsgemäßen Auflageschere 2, das in vielen Aspekten mit dem ersten Ausführungsbeispiel aus Fig. 1 übereinstimmt. Um Wiederholungen zu vermeiden, wird im Nachfolgenden nur auf die Unterschiede eingegangen.

Der Klingenkörper 4 gemäß dem zweiten Ausführungsbeispiel besitzt drei Klingen, zwei äußere Klingen 34, 36 und eine mittlere Klinge 38. Daher wird die Auflageschere 2 gemäß dem zweiten Ausführungsbeispiel auch als Drei-Klingen-Auflageschere 40 bezeichnet.

Die drei Klingen 34, 36, 38 sind parallel und beabstandet zueinander angeordnet. Zueinander benachbarte Klingen 34, 38 bzw. 36, 38 sind jeweils mit einem Abstand a zueinander beabstandet. Zur Stabilisierung des Klingenkörpers 4 sind die Klingen 34, 36, 38 über ein Abstandshalter-Stabilisierungselement 42 miteinander verbunden. Das Abstandshalter-Stabilisierungselement 42 kann, wie das Abstandshalter-Stabilisierungselement 31, bspw. als ein Bolzen mit einem konstanten Durchmesser ausgebildet sein, der mittels einer Presspassung in dafür vorgesehene Öffnungen, die in den Klingen ausgebildet sind, eingesetzt ist.

Analog zum ersten Ausführungsbeispiel besitzt die Auflagefläche 14 des Gegenstücks 6 eine Vertiefungsrille 18 für jede Klinge 34, 36, 38, also insgesamt drei Vertiefungsrillen 18.

Die beiden äußeren Klingen 34, 36 weisen beide eine Aussparung 44 auf, die analog zur Aussparung 12 gemäß dem ersten Ausführungsbeispiel ausgebildet und angeordnet sind. Die mittlere Klinge 38 ist aussparungsfrei und entspricht somit sowohl vom Aufbau her als auch funktional der aussparungsfreien Klinge 8 des ersten Ausführungsbeispiels gemäß Fig.1.

Beim Verschwenken des Klingenkörpers 4 in der Schwenkebene auf das Gegenstück 6 zu, durchtrennen alle drei Klingen 34, 36, 38 den Hart-Kunststoffkörper der Anputzleiste 26. Bei den beiden äußeren Klingen 34, 36 wird dabei das Dichtband 28 in den Aussparungen 44 aufgenommen und somit stehengelassen, sodass das Dichtband 28 nur von der mittleren, aussparungsfreien Klinge 38 durchtrennt wird.

Die Aussparung 44 in den beiden äußeren Klingen 34 und 36 ist jeweils derart bemessen und positioniert, dass bei einem Verschwenken zum Gegenstück 6 hin das Dichtband 28 in der Aussparung 44 aufgenommen und somit stehengelassen, also nicht durchtrennt wird. Somit erzeugen die beiden äußeren Klingen 34 und 36 jeweils eine unterbrochene Schnittkante.

So erzeugt die Drei-Klingen-Auflageschere 40 beim Durchtrennen einer Anputzleiste 26 zwei Anputzleisten-Teilstücke 46, 48 (siehe Fig. 4), die jeweils einen Dichtbandüberstand d aufweisen und insgesamt zwei Hart-Kunststoffbereiche 50, 52 der Anputzleiste 26, je einen zwischen der mittleren, aussparungsfreien Klinge 38 und einer äußeren Klinge 34, 36. Die beiden Hartkunststoff-Bereiche stellen Ausschuss dar. Die zwei Anputzleisten-Teilstücke 46, 48 weisen den Dichtbandüberstand d an den sich jeweils gegenüberliegenden Endbereichen, also jeweils dem der aussparungsfreien Klinge 38 zugewandten Endbereich, auf. Das bedeutet, dass das eine Anputzleisten-Teilstück 46 in Fig. 4 nach dem Durchtrennen einen Dichtbandüberstand d am linken Endbereich besitzt und das andere Anputzleisten-Teilstück 48 den Dichtbandüberstand d nach dem Durchtrennen am rechten Endbereich besitzt.

Die mittlere, aussparungsfreie Klinge 38 durchtrennt die Anputzleiste 26 mit dem Dichtband 28 entlang einer durchgehenden Schnittkante, die beiden äußeren Klingen 34, 36 lassen das Dichtband 28 stehen und durchtrennen nur die anderen Bereiche der Anputzleiste 26, sodass diese Klingen 34, 36 eine unterbrochene Schnittkante ausbilden. Dadurch wird die Größe des Dichtbandüberstands d, wie beim ersten Ausführungsbeispiel, durch den Abstand a, quer zur Klingenerstreckungsrichtung X, zwischen den jeweils zwei zueinander benachbarten Klingen 34, 38 bzw. 36, 38 bestimmt.

Bei der in den Figuren gezeigten Anputzleiste 26 handelt es sich um eine Anputzleiste mit, von der Anschlagswand 16 in Klingenrichtung weg gesehen, folgenden Elementen: Einer Schutzlasche, an der üblicherweise eine Folie zum Überspannen des Fensters oder der Tür befestigt wird und die nach erfolgtem Einputzen von dem Rest der Anputzleiste entfernt wird, einen mit einer Rillenprofilierung versehenen Anputzbereich mit Wegragsteg, und einen Befestigungs- und Abdichtbereich, der einen U-förmigen Aufnahmebereich und ein darin aufgenommenes Dichtband 28, sowie einen rückwärtigen Endbereich umfasst.

In den vorliegenden exemplarischen Ausführungsbeispielen ist die Anputzleiste 26 so auf der Auflagefläche 14 positioniert, dass sie mit der Vorderkante ihrer Schutzlasche an der Anschlagswand 16 anliegt.

In dieser Positionierung stimmt die Position der Aussparung 12 bei der Zwei-Klingen-Variante gemäß Figur 1 bzw. die Position der Aussparungen 44 bei der Drei-Klingen-Variante gemäß Figur 2 mit der Position des Dichtbands 28 überein, so dass dieses bei einem Schnitt durch die Klinge 10, bei der Zwei-Klingen-Variante, bzw. durch die Klingen 34 und 36, bei der Drei-Klingen-Variante stehengelassen wird.

Selbstverständlich ist diese Anputzleiste 26 nur exemplarisch, und es sind auch andere Anordnungen der Anputzleiste 26 auf der Auflagefläche 14 möglich, solange nur die Position und Abmessung der Aussparung(en) in der oder den Klingen 10 bzw. 34 und 36 der Position und Abmessung des Dichtbands 28 entspricht, so dass dieses bei einem Schnitt durch die entsprechende Klinge stehengelassen wird.

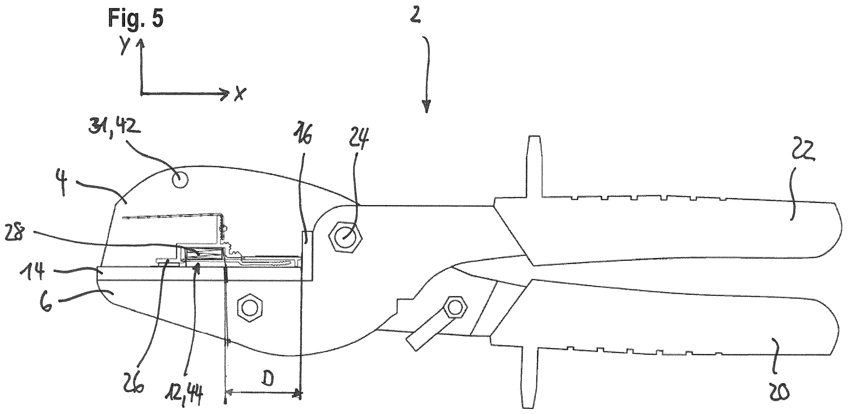

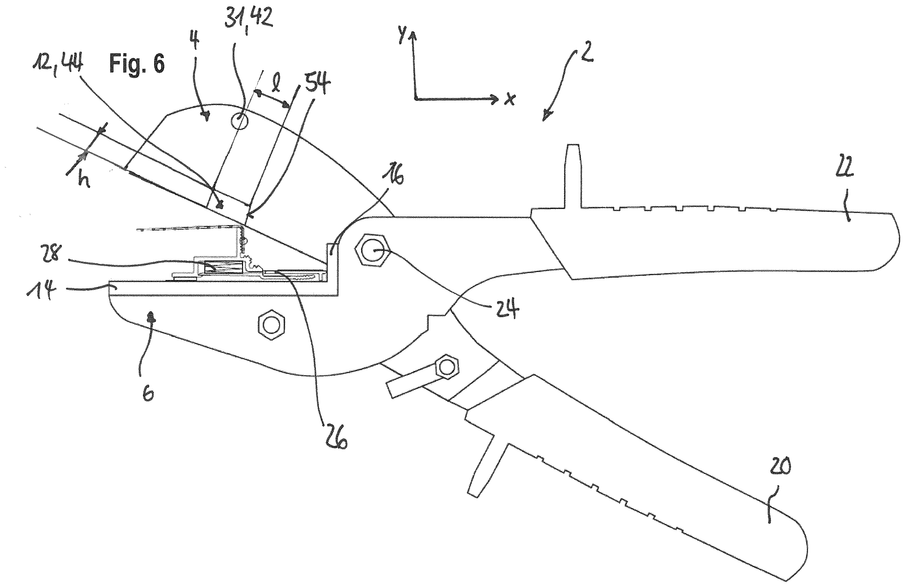

In den Ausführungsbeispielen der Figuren 5 und 6 ist zudem noch ein Armierungsgewebeabschnitt gezeigt, der an dem Wegragsteg befestigt ist und nach oben hin und nach vorne geknickt dargestellt ist. Dieser Armierungsgewebeabschnitt wird durch die Klingen ebenfalls durchtrennt.

Die Fig. 5 und 6 zeigen die Auflageschere 2 jeweils von der Seite, wobei Fig. 5 die Auflageschere 2 im geschlossenen Zustand und Fig. 6 die Auflageschere 2 im geöffneten Zustand zeigt. Die in den Fig. 5 und 6 gezeigte Auflageschere 2 kann sowohl die Zwei-Klingen-Auflageschere 32 gemäß dem ersten Ausführungsbeispiel als auch die Drei-Klingen-Auflageschere 40 gemäß dem zweiten Ausführungsbeispiel sein. Beide Figuren veranschaulichen die Position der Anputzleiste 26 auf der Auflagefläche 14 des Gegenstücks 6. Zum Durchtrennen der Anputzleiste 26 liegt diese mit einer Längskante, insbesondere mit der Vorderkante ihrer Schutzlasche an der Anschlagswand 16 des Gegenstücks 6 an.

In allen gezeigten Ausführungsbeispielen der Auflageschere 2 sind die Aussparungen 12 bzw. 44 in den jeweiligen Klingen 10 bzw. 34, 36 in der Klingenerstreckungsrichtung X derart positioniert und bemessen, dass das Dichtband 28 der auf der Auflagefläche 14 positionierten Anputzleiste 26 beim Verschwenken des Klingenkörpers 4 zum Gegenstück 6 hin in der jeweiligen Aussparung 12 bzw. 44 aufgenommen und somit stehengelassen wird. Die Aussparung 12 bzw. 44 ist in den gezeigten Ausführungsbeispielen im Wesentlichen rechteckig ausgebildet, wobei eine gelenkseitig ausgebildete Kante 54 der Aussparung in Richtung zur Schneidkante 33 hin leicht nach außen geneigt ist. Dadurch wird das Aufnehmen des Dichtband 28 in der Aussparung 12 bzw. 44 vereinfacht.

Die rechteckige Aussparung 12 bzw. 44 besitzt in der Klingenerstreckungsrichtung X gesehen eine Länge l von etwa 10 mm bis 12 mm und in der Schwenkrichtung (Richtung Y) gesehen, eine Höhe h von etwa 3 mm bis 4,5 mm. Die genaue Abmessung richtet sich nach der Abmessung des Dichtbands 28, das stehengelassen werden soll. Die dem Gelenk 24 zugewandte, vordere Kante 54 der Aussparung 12 bzw. 44 weist einen Abstand D (siehe Fig. 5) von etwa 5 mm bis 30 mm zur Anschlagswand 16 auf. Der Abstand D entspricht dem Abstand einer dem Gelenk 24 zugewandten, vorderen Fläche des Dichtbands 28 zu der der Anschlagswand 16 zugewandten, vorzugsweise an der Anschlagswand 16 anliegenden, vorderen Kante der auf der Auflagefläche 14 positionierten Anputzleiste 26, insbesondere der Vorderkante der Schutzlasche.

Die Aussparung 12 bzw. 44 kann auch andere Konturen aufweisen. Die Aussparung 12 bzw. 44 ist derart auszuführen, dass sie im Wesentlichen einer Außenform des Dichtbands 28 entspricht.

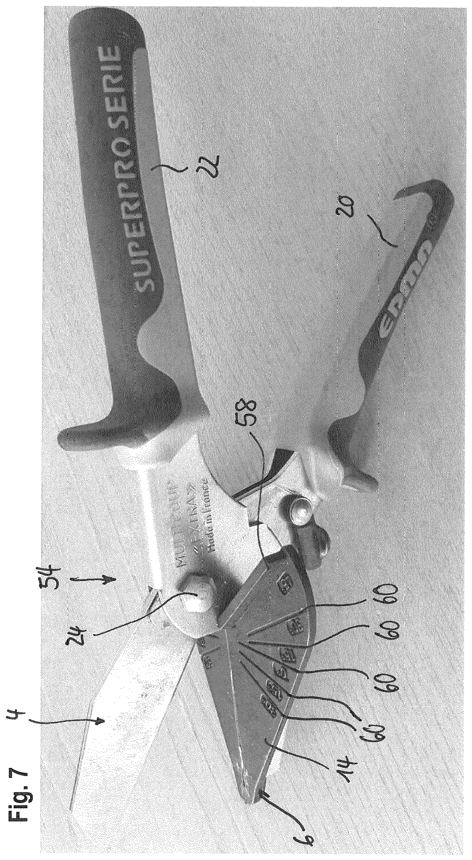

Die Auflageschere 2 kann auch nach Art einer Gehrungsschere 56, wie in Fig. 7 abgebildet, ausgebildet sein. Hierbei weist die Auflagefläche 14 des Gegenstücks 6 wenigstens einen Anschlag 58, bspw. in Form einer Anschlagswand, und/oder eine Markierung 60, bspw. eine Winkelmarkierung, auf. Die Markierung dient zur schrägen Positionierung der zu durchtrennenden Anputzleiste 26 bezogen auf die Klingenerstreckungsrichtung X und/oder zur Ausführung eines schrägen Schnitts durch die Anputzleiste 26.

Zum Durchtrennen der Anputzleiste 26 und zum Erzeugen eines definierten Dichtbandüberstands d wird zunächst die Anputzleiste 26, die ein Dichtband 28 aufweist, auf der Auflagefläche 14 des Gegenstücks 6 der Auflageschere 2 positioniert. Anschließend wird der Klingenkörper 4 auf das Gegenstück 6 zu bewegt, wobei die Anputzleiste 26 durchtrennt wird, indem der Klingenkörper 4, einen drückenden Schnitt durchführend, durch die Anputzleiste 26 gleitet und auf der Auflagefläche 14 des Gegenstücks 6 zum Liegen kommt. Dabei durchtrennt die aussparungsfreie Klinge 8 bzw.

38 die gesamte Anputzleiste 26 einschließlich dem Dichtband 28. Zumindest eine Klinge 10 bzw. 34, 36 weist eine Aussparung auf, die zur Erzeugung des definierten Dichtbandüberstands d ausgebildet ist, was nicht gezeigt ist.

Zwar ist in der Darstellung der Figur 7 keine Aussparung in einer Klinge des Klingenkörpers 4 gezeigt, jedoch gelten sowohl die Zwei-Klingen-Ausführung der Figur 1 als auch die Drei-Klingen-Ausführung der Figur 2 ausdrücklich auch für die Gehrungsschere 56 der Figur 7 als mit offenbart.

Um das Positionieren und insbesondere das Halten der gewählten Position der Anputzleiste 26 auf der Auflagefläche 14 des Gegenstücks 6 zu vereinfachen, kann die Anputzleiste 26 mit einer gelenkseitig ausgerichteten Kante an der Anschlagswand 16 angelegt werden.

### Bezugszeichenliste

- 2: Auflageschere
- 4: Klingenkörper
- 6: Gegenstück
- 8: Klinge
- 10: Klinge
- 12: Aussparung
- 14: Auflagefläche
- 16: Anschlagswand
- 18: Vertiefungsrillen
- 20: erster Griffabschnitt
- 22: zweiter Griffabschnitt
- 24: Gelenk
- 26: Anputzleiste
- 28: Dichtband
- 30: Schlitz
- 31: Abstandshalter-Stabilisierungselement
- 32: Zwei-Klingen-Auflageschere
- 33: Schneidkanten
- 34: äußere Klinge
- 36: äußere Klinge
- 38: mittlere Klinge
- 40: Drei-Klingen-Auflageschere
- 42: Abstandshalter-Stabilisierungselement
- 44: Aussparung
- 46: Anputzleisten-Teilstück
- 48: Anputzleisten-Teilstück
- 50: Hart-Kunststoffbereich
- 52: Hart-Kunststoffbereich
- 54: Kante
- 56: Gehrungsschere
- 58: Anschlag
- 60: Markierung
- X: Klingenerstreckungsrichtung
- Z: Klingenanordnungsrichtung
- a: Abstand
- d: Dichtbandüberstand
- D: Abstand
- h: Höhe
- l, l_{A}: Länge
- b_{A}: Breite

## Patentansprüche

1. Auflageschere (2) zum Durchtrennen einer Anputzleiste (26) und zum automatischen Erstellen eines Dichtbandüberstands (d), aufweisend:
einen Klingenkörper (4), der dazu ausgebildet ist, die Anputzleiste (26) zu durchtrennen; und
ein Gegenstück (6), das eine Auflagefläche (14) zum Auflegen einer zu durchtrennenden Anputzleiste (26) mit Dichtband (28) aufweist, und die Bewegung des Klingenkörpers (4) begrenzt,
**dadurch gekennzeichnet,**
**dass** der Klingenkörper (4) zwei beabstandete Klingen (8, 10) aufweist, wobei eine der Klingen (10) eine Aussparung (12) aufweist, die zur Erzeugung eines definierten Dichtbandüberstands (d) ausgebildet ist und wobei die andere Klinge (8) aussparungsfrei ausgebildet ist; oder
**dass** der Klingenkörper (4) drei beanstandete Klingen aufweist, wobei die beiden äußeren Klingen (34, 36) jeweils eine Aussparung (44) aufweisen, die zur Erzeugung eines definierten Dichtbandüberstands (d) ausgebildet sind, und wobei die mittlere Klinge (38) aussparungsfrei ausgebildet ist.

2. Auflageschere (2) nach Anspruch 1,
wobei in dem Fall, dass der Klingenkörper (4) zwei beabstandete Klingen (8, 10) aufweist, eine auf der Auflagefläche (14) des Gegenstücks (6) aufgelegte, zu durchtrennende Anputzleiste (26) mit Dichtband (28) so durchtrennbar ist, dass die Anputzleiste (28) in zwei Anputzleisten-Teilstücke durchtrennt wird, von denen eine einen Dichtbandüberstand (d) aufweist; oder
wobei in dem Fall, dass der Klingenkörper (4) drei beanstandete Klingen (34, 36, 38) aufweist, eine auf der Auflagefläche (14) des Gegenstücks (6) aufgelegte, zu durchtrennende Anputzleiste (26) mit Dichtband (28) so durchtrennbar ist, dass die Anputzleiste (28) in zwei Anputzleisten-Teilstücke (46, 48), jeweils mit Dichtbandüberstand (d) durchtrennt wird, wobei die zwei Anputzleisten-Teilstücke (46, 48) insbesondere jeweils eines linkes und ein dazu spiegelverkehrtes rechtes Endstück, jeweils mit Dichtbandüberstand (d), insbesondere jeweils eines linkes und rechtes Endstück, jeweils mit Dichtbandüberstand (d) aufweisen.

3. Auflageschere (2) nach Anspruch 1 oder 2,
wobei der zwischen der aussparungsfreien Klinge (8; 38) und der Klinge mit Aussparung (10) bzw. und den beiden äußeren Klingen mit Aussparung (34, 36) gelegene Hart-Kunststoffbereich (50, 52) von der aufgelegten Anputzleiste (26) und den entstehenden zwei Anputzleisten-Teilstücken (46, 48) abgetrennt wird und Ausschuss darstellt.

4. Auflageschere (2) nach einem der vorhergehenden Ansprüche,
wobei die Position der Aussparung (12, 44) in Klingenerstreckungsrichtung (X) und/oder die Aussparung (12, 44) in der Klinge mit Aussparung (10) bzw. in wenigstens einer der beiden äußeren Klingen mit Aussparung (34, 36), insbesondere die Höhe (h) und Länge (l) der Aussparung (12, 44) in der Klinge mit Aussparung (10) bzw. in wenigstens einer der beiden äußeren Klingen mit Aussparung (34, 36), in Klingenerstreckungsrichtung (X) gesehen, derart bemessen ist, dass ein Dichtband (28) einer auf der Auflagefläche (14) positionierten Anputzleiste (26) bei einem Verschwenken der zwei bzw. drei Klingen (8, 10; 34, 36, 38)) in Richtung Auflagefläche (14) in der Aussparung (12; 44) aufgenommen und somit stehengelassen wird, aber die anderen Bereiche der Anputzleiste (26), insbesondere die Hart-Kunststoffbereiche (50, 52) der Anputzleiste (26) durch diese Klinge (10; 34, 36) durchtrennt werden, sodass eine unterbrochene Schnittkante gebildet wird.

5. Auflageschere (2) nach einem der vorhergehenden Ansprüche,
wobei durch die aussparungsfreie Klinge (8, 38) bzw. durch wenigstens eine der beiden äußeren Klingen mit Aussparung (10) die gesamte, auf der Auflagefläche (14) positionierte Anputzleiste (26) entlang einer durchgehenden Schnittkante durchtrennt wird, sodass das durch die Klinge (10) mit Aussparung (12) bzw. durch wenigstens eine der beiden äußeren Klingen (34, 36) mit Aussparung (44) stehengelassene Dichtband (28) um eine Länge (d) über diese durchgehende Schnittkante übersteht, die dem Abstand (a) zwischen den zwei bzw. drei Klingen (8, 10; 34, 36, 38), quer zur Klingenerstreckungsrichtung (X) gesehen, entspricht.

6. Auflageschere (2) nach einem der vorhergehenden Ansprüche,
wobei die Aussparung (12; 44) in der Klinge mit Aussparung (10) bzw. in wenigstens einer der beiden äußeren Klingen mit Aussparung (34, 36) in Klingenerstreckungsrichtung (X) eine rechteckige Gestalt hat, die im Wesentlichen der Außenform des Dichtbands (28) entspricht; und/oder
wobei die Aussparung (12; 44) in der Klinge mit Aussparung (10) bzw. in wenigstens einer der beiden äußeren Klingen (34, 36) mit Aussparung (10) eine Länge (l), in Klingenerstreckungsrichtung (X) gesehen, von etwa 10 mm bis 12 mm; und/oder
wobei die Aussparung (12; 44) in der Klinge mit Aussparung (10) bzw. in wenigstens einer der beiden äußeren Klingen (34, 36) mit Aussparung (10) eine Höhe (h), in Schwenkrichtung gesehen, von etwa 3 mm bis 4,5 mm besitzt.

7. Auflageschere (2) nach einem der vorhergehenden Ansprüche,
wobei das Gegenstück (6) eine vordere, insbesondere gelenkseitig angeordnete Anschlagswand (16) besitzt, die zur Positionierung der Anputzleiste (26) ausgebildet ist.

8. Auflageschere (2) nach Anspruch 7,
wobei die vordere, insbesondere gelenkseitig angeordnete Kante (54) der Aussparung (12; 44) in der Klinge mit Aussparung (10) bzw. in wenigstens eine der beiden äu-ßeren Klingen (34, 36) mit Aussparung (10) einen Abstand (D) zur Anschlagswand (16) aufweist, die dem Abstand der vorderen Fläche des Dichtbands (28) zu der vordersten Kante der auf der Auflagefläche (14) positionierten Anputzleiste (26) entspricht; und/ oder
wobei die vordere, insbesondere gelenkseitig angeordnete Kante (54) der Aussparung (12) in der Klinge mit Aussparung (10) bzw. in wenigstens eine der beiden äußeren Klingen (34, 36) mit Aussparung (10) einen Abstand (D) von etwa 5 mm bis 30mm zur Anschlagswand (16) aufweist.

9. Auflageschere (2) nach Anspruch 7 oder 8,
wobei in der Anschlagswand (16) ein Schlitz (30) ausgebildet ist, der eine Bewegung der zwei bzw. drei Klingen (8, 10; 34, 36, 38) durch die Anschlagswand (16) ermöglicht.

10. Auflageschere (2) nach einem der vorhergehenden Ansprüche
wobei die Auflagefläche (14) zwei bzw. drei Vertiefungsrillen (18) an Breitenpositionen aufweist, die in der Schwenkebene der zwei bzw. drei Klingen (8, 10; 34, 36, 38) angeordnet sind, sodass bei einem Verschwenken der zwei bzw. drei Klingen (8, 10; 34, 36, 38) in Richtung Auflagefläche (14) die zwei bzw. drei Klingen (8, 10; 34, 36, 38) in den zwei bzw. drei Vertiefungsrillen (18) aufgenommen werden.

11. Auflageschere (2) nach einem der vorhergehenden Ansprüche,
wobei die unteren Schneidkanten (33) der zwei bzw. drei Klingen (8, 10; 34, 36, 38) in einer Ebene senkrecht zur Klingenerstreckungsrichtung (X) liegen.

12. Auflageschere (2) nach einem der vorhergehenden Ansprüche,
wobei der Klingenkörper (4) mit einem ersten Griffabschnitt (20) verbunden ist und das Gegenstück (6) mit einem zweiten Griffabschnitt (22) verbunden ist, die über ein Gelenk (24) derart miteinander verbunden sind, dass der Klingenkörper (4) und das Gegenstück (6) gegeneinander beweglich sind; und/oder
wobei der Klingenkörper (4) austauschbar mit dem Gegenstück (6) verbunden ist..

13. Auflageschere (2) nach einem der vorhergehenden Ansprüche,
wobei die Auflageschere nach Art einer Gehrungsschere (56) ausgebildet ist, und/ oder
wobei insbesondere die Auflagefläche (14) des Gegenstücks (6) mit wenigstens einem Anschlag (58) oder einer Markierung (60) für eine schräge Positionierung der zu durchtrennenden Anputzleiste (26), bezogen auf die Klingenerstreckungsrichtung (X) und/oder für einen schrägen Schnitt durch die Anputzleiste (26) ausgebildet oder versehen ist.

14. Anordnung, aufweisend eine Auflageschere (2) nach einem der vorhergehenden Ansprüche und eine auf der Auflagefläche (14) des Gegenstücks (6) aufgelegten Anputzleiste (26) mit einem Dichtband (28).

15. Verfahren zum Durchtrennen einer Anputzleiste (26) und zum Erzeugen eines definierten Dichtbandüberstands (d) eines Dichtbandes (28), wobei das Verfahren die folgenden Schritte aufweist:
Positionieren einer Anputzleiste (26), die ein Dichtband (28) aufweist, auf der Auflagefläche (14) eines Gegenstücks (6) einer Auflageschere (2);
Durchtrennen der Anputzleiste (26), indem ein Klingenkörper (4) mit zwei beabstandeten angeordneten Klingen (8, 10), von der eine Klinge (10) eine Aussparung (12) aufweist, wobei die andere Klinge (8) aussparungsfrei ausgebildet ist, oder indem ein Klingenkörper (4) mit drei beanstandeten Klingen (34, 36, 38) von denen die beiden äußeren Klingen (34, 36) jeweils eine Aussparung (44) aufweisen und die mittlere Klinge (38) aussparungsfrei ausgebildet ist, unter Durchführung eines drückenden Schnitts durch die Anputzleiste (26) gleitet, und auf der Auflagefläche (14) des Gegenstücks (6) oder kurz davor zu liegen kommt;
wobei eine Klinge (8) bzw. die mittlere Klinge (38) des Klingenkörpers (6) die gesamte Anputzleiste (26) durchtrennt und die andere Klinge (10) bzw. die äußeren Klingen (34, 36) im Bereich der Aussparung (12; 44) das Dichtband (28) stehen lässt.

## Claims

1. Support shears (2) for severing a plastering strip (26) and for automatically creating a sealing tape projection (d), comprising:
a blade body (4) adapted to sever the plastering strip (26); and
a counterpart (6) which has a support surface (14) for placement of a plastering strip (26) with sealing tape (28), which is to be severed, and limits the movement of the blade body (4),
**characterized in that** the blade body (4) has two spaced apart blades (8, 10), one of the blades (10) having a recess (12) which is adapted to create a defined sealing tape projection (d) and the other blade (8) being recess-free; or
that the blade body (4) has three spaced apart blades, the two outer blades (34, 36) each having a recess (44) adapted to create a defined sealing tape projection (d), and the middle blade (38) being recess-free.

2. The support shears (2) according to claim 1,
wherein in the case that the blade body (4) has two spaced apart blades (8, 10), a plastering strip (26) with sealing tape (28), which is to be severed and is placed on the support surface (14) of the counterpart (6), can be severed in such a way that the plastering strip (28) is severed into two plastering strip sections, one of which has a sealing tape projection (d); or
wherein in the case that the blade body (4) has three spaced apart blades (34, 36, 38), a plastering strip (26) with sealing tape (28), which is to be severed and is placed on the support surface (14) of the counterpart (6), can be severed in such a way that the plastering strip (28) is severed into two plastering strip sections (46, 48), each with a sealing tape projection (d), the two plastering strip sections (46, 48) in particular each having a left end piece and a mirror-inverted right end piece, each with a sealing tape projection (d), in particular a left and right end piece, each with a sealing tape projection (d).

3. The support shears (2) according to claim 1 or 2,
wherein the hard plastics area (50, 52) located between the recess-free blade (8; 38) and the blade (10) with recess or between the two outer blades with recess (34, 38) is severed from the supported plastering strip (26) and the resulting two plastering strip sections (46, 48) and constitutes scrap.

4. The support shears (2) according to any of the preceding claims,
wherein the position of the recess (12, 44) in the blade extension direction (X) and/or the recess (12, 44) in the blade with recess (10) or in at least one of the two outer blades with recess (34, 36), in particular the height (h) and length (l) of the recess (12, 44) in the blade with recess (10) or in at least one of the two outer blades with recess (34, 36), as seen in the blade extension direction (X), is dimensioned such that a sealing tape (28) of a plastering strip (26) positioned on the support surface (14), when the two or three blades (8, 10; 34, 36, 38) are pivoted in the direction towards the support surface (14), is received in the recess (12; 44) and is thus left standing, whereas the other areas of the plastering strip (26), in particular the hard plastics areas (50, 52) of the plastering strip (26) are severed by this blade (10; 34, 36) so that an interrupted cutting edge is formed.

5. The support shears (2) according to any of the preceding claims,
wherein the entire plastering strip (26) positioned on the support surface (14) is severed along a continuous cutting edge by the recess-free blade (8, 38) or by at least one of the two outer blades with a recess (10), so that the sealing tape (28) left standing by the blade (10) with recess (12) or by at least one of the two outer blades (34, 36) with recess (44), projects by a length (d) beyond this continuous cutting edge, which corresponds to the distance (a) between the two or three blades (8, 10; 34, 36, 38), as seen transversely to the blade extension direction (X).

6. The support shears (2) according to any of the preceding claims,
wherein the recess (12; 44) in the blade with recess (10) or in at least one of the two outer blades with recess (34, 36) has a rectangular shape in the blade extension direction (X), which substantially corresponds to the external shape of the sealing tape (28); and/or
wherein the recess (12; 44) in the blade with recess (10) or in at least one of the two outer blades (34, 36) with recess (10) has a length (l), as seen in the blade extension direction (X), of about 10 mm to 12 mm; and/or
wherein the recess (12; 44) in the blade with recess (10) or in at least one of the two outer blades (34, 36) with recess (10) has a height (h), as seen in the pivoting direction, of about 3 mm to 4.5 mm.

7. The support shears (2) according to any of the preceding claims,
wherein the counterpart (6) has a front stop wall (16), arranged in particular on the joint side, which is designed for positioning the plastering strip (26).

8. The support shears (2) according to claim 7,
wherein the front edge (54), arranged in particular on the joint side, of the recess (12; 44) in the blade with a recess (10) or in at least one of the two outer blades (34, 36) with a recess (10) has a distance (D) from the stop wall (16) which corresponds to the distance of the front surface of the sealing tape (28) to the frontmost edge of the plastering strip (26) positioned on the support surface (14); and/or
wherein the front edge (54), arranged in particular on the joint side, of the recess (12) in the blade with recess (10) or in at least one of the two outer blades (34, 36) with recess (10) has a distance (D) of about 5 mm to 30mm to the stop wall (16).

9. The support shears (2) according to claim 7 or 8,
wherein a slot (30) is formed in the stop wall (16), which allows movement of the two or three blades (8, 10; 34, 36, 38) through the stop wall (16).

10. The support shears (2) according to any of the preceding claims,
wherein the support surface (14) has two or three recess grooves (18) at width positions which are arranged in the pivoting plane of the two or three blades (8, 10; 34, 36, 38), so that when the two or three blades (8, 10; 34, 36, 38) are pivoted towards the support surface (14), the two or three blades (8, 10; 34, 36, 38) are received in the two or three recess grooves (18).

11. The support shears (2) according to any of the preceding claims,
wherein the lower cutting edges (33) of the two or three blades (8, 10; 34, 36, 38) are arranged in a plane perpendicular to the blade extension direction (X).

12. The support shears (2) according to any of the preceding claims,
wherein the blade body (4) is connected to a first handle section (20) and the counterpart (6) is connected to a second handle section (22), which are connected to one another via a joint (24) such that the blade body (4) and the counterpart (6) are movable relative to one another; and/or
wherein the blade body (4) is exchangeably connected to the counterpart (6).

13. The support shears (2) according to any of the preceding claims,
wherein the support shears are designed in the manner of mitre shears (56), and/or
wherein in particular the support surface (14) of the counterpart (6) is formed or provided with at least one stop (58) or a marking (60) for oblique positioning of the plastering strip (26) to be severed, with respect to the blade extension direction (X), and/or for an oblique cut through the plastering strip (26).

14. An arrangement, comprising support shears (2) according to any of the preceding claims and a plastering strip (26) with a sealing tape (28) placed on the support surface (14) of the counterpart (6).

15. A method for severing a plastering strip (26) and for creating a defined sealing tape projection (d) of a sealing tape (28), the method comprising the following steps:
positioning a plastering strip (26), which has a sealing tape (28), on the support surface (14) of a counterpart (6) of support shears (2);
severing the plastering strip (26) in that a blade body (4) with two spaced apart blades (8, 10), one blade (10) of which has a recess (12) and the other blade (8) is recess-free, or in that a blade body (4) with three spaced apart blades (34, 36, 38), of which the two outer blades (34, 36) each have a recess (44) and the middle blade (38) is recess-free, slides while making a pressing cut through the plastering strip (26), and comes to lie on or just before the support surface (14) of the counterpart (6);
wherein a blade (8) or the middle blade (38) of the blade body (6) cuts through the entire plastering strip (26) and the other blade (10) or the outer blades (34, 36) leave the sealing tape (28) standing in the area of the recess (12; 44).

## Revendications

1. Cisaille d'appui (2) destinée au sectionnement d'une baguette à crépissage (26) et à la génération automatique d'un débord de ruban d'étanchéité (d), comportant :
un corps de lame (4) réalisé pour sectionner la baguette à crépissage (26) ; et
une contre-pièce (6) qui comporte une surface d'appui (14) pour l'appui d'une baguette à crépissage (26), ayant un ruban d'étanchéité (28), devant être sectionnée, et qui limite le mouvement du corps de lame (4),
**caractérisée en ce**
**que** le corps de lame (4) comporte deux lames (8, 10) espacées, une des lames (10) comportant un évidement (12) réalisé pour la génération d'un débord défini de ruban d'étanchéité (d), et l'autre lame (8) étant réalisée sans évidement ; ou
**que** le corps de lame (4) comporte trois lames espacées, les deux lames extérieures (34, 36) comportant respectivement un évidement (44), réalisées pour la génération d'un débord défini de ruban d'étanchéité (d), et la lame du milieu (38) étant réalisée sans évidement.

2. Cisaille d'appui (2) selon la revendication 1,
cependant que, dans le cas où le corps de lame (4) comporte deux lames (8, 10) espacées, une baguette à crépissage (26) à sectionner , ayant un ruban d'étanchéité (28), en appui sur la surface d'appui (14) de la contre-pièce (6), peut être sectionnée de telle façon que la baguette à crépissage (28) est sectionnée en deux parties de baguette à crépissage dont une comporte un débord de ruban d'étanchéité (d) ; ou
cependant que, dans le cas où le corps de lame (4) comporte trois lames (34, 36, 38) espacées, une baguette à crépissage (26) à sectionner, ayant un ruban d'étanchéité (28), en appui sur la surface d'appui (14) de la contre-pièce (6), peut être sectionnée de telle façon que la baguette à crépissage (28) est sectionnée en deux parties de baguette à crépissage (46, 48) ayant respectivement un débord de ruban d'étanchéité (d), cependant que les deux parties de baguette à crépissage (46, 48), en particulier respectivement une partie d'extrémité gauche et une partie d'extrémité droite en symétrie inversée par rapport à elle, ayant respectivement un débord de ruban d'étanchéité (d), comportent en particulier respectivement une partie d'extrémité gauche et une partie d'extrémité droite, ayant respectivement un débord de ruban d'étanchéité (d).

3. Cisaille d'appui (2) selon la revendication 1 ou 2,
cependant que la zone de plastique rigide (50, 52) située entre la lame sans évidement (8; 38) et la lame à évidement (10) ou et les deux lames extérieures à évidement (34, 36) est séparée de la baguette à crépissage (26) en appui et des deux parties de baguette à crépissage (46, 48) engendrées et représente un rebut.

4. Cisaille d'appui (2) selon une des revendications précédentes,
cependant que la position de l'évidement (12, 44) dans la direction de l'extension de la lame (X), et/ou l'évidement (12, 44) dans la lame ayant un évidement (10) ou dans au moins une des deux lames extérieures ayant un évidement (34, 36), en particulier la hauteur (h) et la longueur (l) de l'évidement (12, 44) dans la lame ayant un évidement (10) ou dans au moins une des deux lames extérieures ayant un évidement (34, 36), vu(e) dans la direction de l'extension de la lame (X), est dimensionné(e) de telle façon qu'un ruban d'étanchéité (28) d'une baguette à crépissage (26) positionnée sur la surface d'appui (14) est, lors d'un pivotement des deux ou trois lames (8, 10; 34, 36, 38) en direction de la surface d'appui (14), capturé dans l'évidement (12; 44) et ainsi épargné, mais les autres zones de la baguette à crépissage (26), en particulier les zones de plastique rigide (50, 52) de la baguette à crépissage (26) sont sectionnées par cette lame (10; 34, 36), de telle sorte qu'une arête de coupe interrompue est constituée.

5. Cisaille d'appui (2) selon une des revendications précédentes,
cependant que, par la lame sans évidement (8, 38) ou par au moins une des deux lames extérieures ayant un évidement (10), la totalité de la baguette à crépissage (26) positionnée sur la surface d'appui (14) est sectionnée le long d'une arête de coupe continue, de telle sorte que le ruban d'étanchéité (28) épargné par la lame (10) ayant un évidement (12) ou par au moins une des deux lames extérieures (34, 36) ayant un évidement (44) dépasse au-dessus de cette arête de coupe continue d'une longueur (d) qui correspond à l'écart (a) entre les deux ou trois lames (8, 10; 34, 36, 38), vu transversalement à la direction de l'extension de la lame (X).

6. Cisaille d'appui (2) selon une des revendications précédentes,
cependant que l'évidement (12; 44) dans la lame ayant un évidement (10) ou dans au moins une des deux lames extérieures ayant un évidement (34, 36), dans la direction de l'extension de la lame (X), a une forme rectangulaire qui correspond essentiellement à la forme extérieure du ruban d'étanchéité (28) ; et/ou
cependant que l'évidement (12; 44) dans la lame ayant un évidement (10) ou dans au moins une des deux lames extérieures (34, 36) ayant un évidement (10) a, vu dans la direction de l'extension de la lame (X), une longueur (l) d'environ 10 mm à 12 mm ; et/ou
cependant que l'évidement (12; 44) dans la lame ayant un évidement (10) ou dans au moins une des deux lames extérieures (34, 36) ayant un évidement (10) a, vu dans la direction de pivotement, une hauteur (h) d'environ 3 mm à 4,5 mm.

7. Cisaille d'appui (2) selon une des revendications précédentes,
cependant que la contre-pièce (6) possède une paroi antérieure de butée (16) qui est agencée en particulier côté articulation et qui est conçue pour le positionnement de la baguette à crépissage (26).

8. Cisaille d'appui (2) selon la revendication 7,
cependant que l'arête (54) antérieure, en particulier agencée côté articulation, de l'évidement (12; 44) dans la lame ayant un évidement (10) ou dans au moins une des deux lames extérieures (34, 36) ayant un évidement (10) présente par rapport à la paroi de butée (16) un écart (D) qui correspond à l'écart de la surface antérieure du ruban d'étanchéité (28) par rapport à l'arête la plus antérieure de la baguette à crépissage (26) positionnée sur la surface d'appui (14) ; et/ou
cependant que l'arête (54) antérieure, en particulier agencée côté articulation, de l'évidement (12) dans la lame ayant un évidement (10) ou dans au moins une des deux lames extérieures (34, 36) ayant un évidement (10) présente un écart (D) d'environ 5 mm à 30 mm par rapport à la paroi de butée (16).

9. Cisaille d'appui (2) selon la revendication 7 ou 8,
cependant que, dans la paroi de butée (16), une fente (30) est réalisée, laquelle permet un déplacement des deux ou trois lames (8, 10; 34, 36, 38) à travers la paroi de butée (16).

10. Cisaille d'appui (2) selon une des revendications précédentes,
cependant que la surface d'appui (14) comporte deux ou trois rainures de renfoncement (18) à des positions de largeur agencées dans le plan de pivotement des deux ou trois lames (8, 10; 34, 36, 38), de telle sorte que, lors d'un pivotement des deux ou trois lames (8, 10; 34, 36, 38) en direction de la surface d'appui (14), les deux ou trois lames (8, 10; 34, 36, 38) sont capturées dans les deux ou trois rainures de renfoncement (18).

11. Cisaille d'appui (2) selon une des revendications précédentes,
cependant que les arêtes de coupe (33) inférieures des deux ou trois lames (8, 10; 34, 36, 38) se trouvent dans un plan perpendiculaire à la direction de l'extension de la lame (X).

12. Cisaille d'appui (2) selon une des revendications précédentes,
cependant que le corps de lame (4) est relié à une première section de poignée (20) et la contre-pièce (6) est reliée à une deuxième section de poignée (22) qui, par l'intermédiaire d'une articulation (24), sont reliées de telle manière entre elles que le corps de lame (4) et la contre-pièce (6) sont mobiles l'un par rapport à l'autre ; et/ou
cependant que le corps de lame (4) est relié de manière remplaçable avec la contre-pièce (6).

13. Cisaille d'appui (2) selon une des revendications précédentes,
cependant que la cisaille d'appui (2) est réalisée à la manière d'une cisaille à onglet (56), et/ou
cependant qu'en particulier la surface d'appui (14) de la contre-pièce (6) est réalisée avec ou est pourvue d'au moins une butée (58) ou un marquage (60) pour un positionnement oblique de la baguette à crépissage (26) à sectionner, relativement à la direction de l'extension de la lame (X), et/ ou pour une coupe oblique à travers la baguette à crépissage (26).

14. Agencement comportant une cisaille d'appui (2) selon une des revendications précédentes et une baguette à crépissage (26), avec un ruban d'étanchéité (28), en appui sur la surface d'appui (14) de la contre-pièce (6).

15. Procédé destiné au sectionnement d'une baguette à crépissage (26) et à la création d'un débord défini de ruban d'étanchéité (d) d'un ruban d'étanchéité (28), cependant que le procédé comporte les étapes suivantes :
positionnement d'une baguette à crépissage (26) comportant un ruban d'étanchéité (28) sur la surface d'appui (14) d'une contre-pièce (6) d'une cisaille d'appui (2) ;
sectionnement de la baguette à crépissage (26), ce qui a lieu en ce qu'un corps de lame (4) ayant deux lames (8, 10) espacées dont l'une lame (10) comporte un évidement (12), l'autre lame (8) étant réalisée sans évidement, ou en ce qu'un corps de lame (4) ayant trois lames espacées (34, 36, 38) dont les deux lames extérieures (34, 36) comportent respectivement un évidement (44) et la lame du milieu (38) est réalisée sans évidement évolue à travers la baguette à crépissage (26) en effectuant une coupe par pression et vient se situer sur la surface d'appui (14) de la contre-pièce (6) ou juste avant cette dernière ;
cependant qu'une lame (8) ou la lame (38) du milieu du corps de lame (6) sectionne la totalité de la baguette à crépissage (26) et l'autre lame (10) ou les lames extérieures (34, 36) épargne(nt) le ruban d'étanchéité (28) dans la zone de l'évidement (12; 44).
